# EUROPEAN PATENT APPLICATION

(11) **EP 4 510 749 A1**
(43) Date of publication of application: **19.02.2025**
(21) Application number: 22936972.3
(22) Date of filing: 15.04.2022
(51) Int. Cl.: H04W 72/54, H04W 52/02

(54) **WIRELESS TRANSMISSION METHOD AND APPARATUS, COMMUNICATION DEVICE AND STORAGE MEDIUM**

(71) Applicant: Beijing Xiaomi Mobile Software Co., Ltd., Beijing 100085 (CN)
(72) Inventor: MU, Qin, Beijing 100085 (CN); QIAO, Xuemei, Beijing 100085 (CN)
(74) Representative: Dehns Germany Partnerschaft mbB
(86) International application number: PCT/CN2022/087223
(87) International publication number: WO 2023/197327

(57) **Abstract**

Embodiments of the present disclosure provide a wireless transmission method. The method is executed by a terminal. The method comprises: on the basis of configuration information, determining a threshold value of signal transmission quality for the terminal to execute small data transmission (SDT), wherein the configuration information is used for indicating at least one of the following: a predetermined threshold value of signal transmission quality for a terminal having a first-type antenna structure to perform SDT; and a correction value of a reference threshold value of the signal transmission quality for the terminal having the first-type antenna structure to perform SDT.

## Description

### TECHNICAL FIELD

The present disclosure relates to but is not limited to the field of wireless communication technologies, and in particular to methods and apparatuses for wireless transmission, a communication device, and a storage medium.

### BACKGROUND

In order to support Internet of things services, two technologies, namely, machine type communication (MTC) and narrow band Internet of things (NB-IoT), are proposed. The two technologies are mainly aimed at low-rate and high-latency scenarios, for example, meter reading, environmental monitoring, or the like. NB-IoT can only support a maximum rate of several hundreds of kilobits (kB), and MTC can only support a rate of several megabits (MB). However, with the continuous development of the Internet of things services, services such as video monitoring, smart homes, wearable devices and industrial sensing monitoring are gradually popularized. These services usually require a rate of several tens to 100M, and also have relatively high requirements for latency. At this time, MTC and NB-IoT technologies are difficult to meet the requirements. Based on this situation, a reduced capability (RedCap) user equipment (UE) or a UE based on new radio-fite (NR-Lite) is introduced.

In the related technologies, there is a small data transmission (SDT) scenario. However, in the SDT scenario, RedCap terminals do not have the same opportunity to perform SDT as ordinary terminals, which limits the communication capability of the RedCap terminals.

### SUMMARY

The embodiments of the present disclosure disclose methods and apparatuses for wireless transmission, a communication device, and a storage medium.

According to a first aspect of an embodiment of the present disclosure, there is provided a wireless transmission method, performed by a terminal, including:
determining a threshold value of signal quality for the terminal to perform small data transmission (SDT) based on configuration information,
where the configuration information is configured to indicate at least one of:
a predetermined threshold value of signal quality for a terminal with a first type antenna structure to perform the SDT; or
a bias value of a reference threshold value of the signal quality for the terminal with the first type antenna structure to perform the SDT.

In one embodiment, the terminal is a terminal with the first type antenna structure, and determining the threshold value of the signal quality for the terminal to perform the SDT based on the configuration information includes:
based on the configuration information, determining the threshold value of the signal quality for performing the SDT as the predetermined threshold value;
   or,
based on the configuration information, determining the threshold value of the signal quality for performing the SDT as the reference threshold value corrected based on the bias value.

In one embodiment, the method further includes:
determining the configuration information based on a communication protocol;
   or,
receiving the configuration information sent by an access network device.

In one embodiment, the threshold value of the signal quality includes a threshold value of signal quality for the terminal to perform the SDT based on a predetermined transmission manner, and the predetermined transmission manner includes at least one of:
a first manner, which is a configured grant based SDT manner;
a second manner, which is a 2-step random access based SDT manner; or
a third manner, which is a 4-step random access based SDT manner,
where a threshold value of the first manner is a first threshold value, a threshold value of the second manner is a second threshold value, a threshold value of the third manner is a third threshold value, the first threshold value is greater than the second threshold value, and the second threshold value is greater than the third threshold value.

In one embodiment, the method further includes:
in response to measured signal quality being greater than the third threshold value, determining to perform the SDT based on the predetermined transmission manner.

In one embodiment, in response to the measured signal quality being greater than the third threshold value, determining to perform the SDT based on the predetermined transmission manner includes:
in response to the measured signal quality being greater than the third threshold value and greater than the first threshold value, determining to perform the SDT based on the first manner;
   or,
in response to the measured signal quality being greater than the third threshold value, greater than the second threshold value and less than the first threshold value, determining to perform the SDT based on the second manner;
   or,
in response to the measured signal quality being greater than the third threshold value, less than the first threshold value and less than the second threshold value, determining to perform the SDT based on the third manner.

In one embodiment, predetermined threshold values for terminals with different types of antenna structures to perform the SDT are different; and/or bias values for the terminals with different types of antenna structures to perform the SDT are different.

In one embodiment, the first type antenna structure includes one of:
in response to the terminal operating in a frequency range 1 (FR1), a number of receiving antennas being a predetermined number; or
in response to the terminal operating in a frequency range 2 (FR2), a number of antenna elements included in a single antenna panel being less than a quantity threshold.

According to a second aspect of an embodiment of the present disclosure, there is provided a wireless transmission method, performed by an access network device, including:
sending configuration information to a terminal,
where the configuration information is configured for the terminal to determine a threshold value of signal quality for the terminal to perform small data transmission (SDT) based on the configuration information,
the configuration information is configured to indicate at least one of:
a predetermined threshold value of signal quality for a terminal with a first type antenna structure to perform the SDT; or
a bias value of a reference threshold value of the signal quality for the terminal with the first type antenna structure to perform the SDT.

In one embodiment, the threshold value of the signal quality includes a threshold value of signal quality for the terminal to perform the SDT based on a predetermined transmission manner, and the predetermined transmission manner includes at least one of:
a first manner, which is a configured grant based SDT manner;
a second manner, which is a 2-step random access based SDT manner; or
a third manner, which is a 4-step random access based SDT manner,
where a threshold value of the first manner is a first threshold value, a threshold value of the second manner is a second threshold value, a threshold value of the third manner is a third threshold value, the first threshold value is greater than the second threshold value, and the second threshold value is greater than the third threshold value.

In one embodiment, predetermined threshold values for terminals with different types of antenna structures to perform the SDT are different; and/or bias values for the terminals with different types of antenna structures to perform the SDT are different.

In one embodiment, the first type antenna structure includes one of:
in response to the terminal operating in a frequency range 1 (FR1), a number of receiving antennas being a predetermined number; or
in response to the terminal operating in a frequency range 2 (FR2), a number of antenna elements included in a single antenna panel being less than a quantity threshold.

According to a third aspect of an embodiment of the present disclosure, there is provided a wireless transmission apparatus, including:
a determining module configured to determine a threshold value of signal quality for the terminal to perform small data transmission (SDT) based on configuration information,
where the configuration information is configured to indicate at least one of:
a predetermined threshold value of signal quality for a terminal with a first type antenna structure to perform the SDT; or
a bias value of a reference threshold value of the signal quality for the terminal with the first type antenna structure to perform the SDT.

According to a fourth aspect of an embodiment of the present disclosure, there is provided a wireless transmission apparatus, including:
a sending module configured to send configuration information to a terminal,
where the configuration information is configured for the terminal to determine a threshold value of signal quality for the terminal to perform small data transmission (SDT) based on the configuration information,
the configuration information is configured to indicate at least one of:
a predetermined threshold value of signal quality for a terminal with a first type antenna structure to perform the SDT; or
a bias value of a reference threshold value of the signal quality for the terminal with the first type antenna structure to perform the SDT.

According to a fifth aspect of an embodiment of the present disclosure, there is provided a communication device, including:
one or more processors; and
a memory for storing executable instructions of the processor,
where the processors are configured to, when executing the executable instructions, implement the method described in any embodiment of the present disclosure.

According to a sixth aspect of an embodiment of the present disclosure, there is provided a computer storage medium storing computer executable programs that, when executed by a processor, implement the method described in any embodiment of the present disclosure.

In the embodiments of the present disclosure, determining a threshold value of signal quality for the terminal to perform small data transmission (SDT) based on configuration information, where the configuration information is configured to indicate at least one of a predetermined threshold value of signal quality for a terminal with a first type antenna structure to perform the SDT; or a bias value of a reference threshold value of the signal quality for the terminal with the first type antenna structure to perform the SDT. Here, since the configuration information indicates the predetermined threshold value of signal quality for the terminal with the first type antenna structure to perform the SDT and/or the bias value of the reference threshold value of the signal quality for the terminal with the first type antenna structure to perform the SDT, the terminal can determine a threshold value of the signal quality for the terminal to perform the SDT based on its own first type antenna structure and the corresponding predetermined threshold value, and perform the SDT based on the threshold value; alternatively, the terminal can determine a threshold value of the signal quality for the terminal to perform the SDT based on its own first type antenna structure and the corresponding reference threshold value and bias value, and perform the SDT based on the threshold value. Since the predetermined threshold value and/or the bias value are configured for the first type antenna structure, the predetermined threshold value and the bias value can be adapted to the first type antenna structure. Compared with a method of using a fixed threshold value for the SDT or a threshold value for a non-first type antenna structure to perform the SDT, the terminal with the first type antenna structure can more easily meet conditions for performing the SDT, thereby increasing opportunities for the terminal with the first type antenna structure to perform the SDT.

### BRIEF DESCRIPTION OF THE DRAWINGS

FIG. 1 is a schematic structural diagram of a wireless communication system according to an exemplary embodiment.
FIG. 2 is a schematic diagram of a threshold for wireless transmission according to an exemplary embodiment.
FIG. 3 is a flowchart of a wireless transmission method according to an exemplary embodiment.
FIG. 4 is a flowchart of a wireless transmission method according to an exemplary embodiment.
FIG. 5 is a flowchart of a wireless transmission method according to an exemplary embodiment.
FIG. 6 is a flowchart of a wireless transmission method according to an exemplary embodiment.
FIG. 7 is a flowchart of a wireless transmission method according to an exemplary embodiment.
FIG. 8 is a schematic diagram of a wireless transmission apparatus according to an exemplary embodiment.
FIG. 9 is a schematic diagram of a wireless transmission apparatus according to an exemplary embodiment.
FIG. 10 is a schematic structural diagram of a terminal according to an exemplary embodiment.
FIG. 11 is a block diagram of a base station according to an exemplary embodiment.

### DETAILED DESCRIPTION OF THE EMBODIMENTS

The exemplary embodiments will be described in detail herein, and examples thereof are shown in accompanying drawings. When the following descriptions refer to the accompanying drawings, unless otherwise indicated, the same numbers in different drawings represent the same or similar elements. The implementations described in the following exemplary embodiments do not represent all the implementations consistent with the embodiments of the present disclosure. Rather, they are merely examples of the apparatus and method consistent with some aspects of the embodiments of the present disclosure as detailed in the appended claims.

Terms used in the embodiments of the present disclosure are for the purpose of describing specific embodiments only, and are not intended to limit the embodiments of the present disclosure. The singular forms "a", "an" and "this" used in the embodiments of the present disclosure and the appended claims are also intended to include plural forms, unless the context clearly indicates other meanings. It should also be understood that the term "and/or" as used herein refers to and includes any and all possible combinations of one or more of the associated listed items.

It should be understood that although terms first, second, third, and the like may be used in the embodiments of the present disclosure to describe various information, such information should not be limited to these terms. These terms are only used to distinguish the same type of information from each other. For example, first information may also be referred to as second information, and similarly, the second information may also be referred to as the first information without departing from the scope of the present disclosure. Depending on the context, the word "if' as used herein can be interpreted as "at the time of", "when" or "in response to determining".

For purposes of conciseness and ease of understanding, terms used herein are "greater than" or "less than" when representing a size relationship. However, it can be understandable for those skilled in the art that the term "greater than" covers the meaning of "greater than or equal to", and "less than" covers the meaning of "less than or equal to".

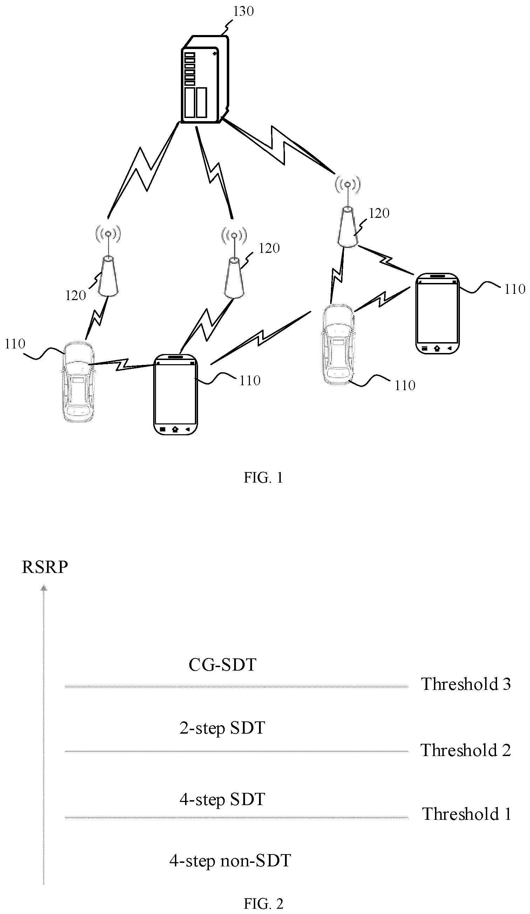

Referring to FIG. 1, FIG. 1 is a schematic structural diagram showing a wireless communication system provided in an embodiment of the present disclosure. As shown in FIG. 1, the wireless communication system is a communication system based on mobile communication technologies, and may include several user equipment (UEs) 110 and several base stations 120.

The UE 110 may be a device that provides voice and/or data connectivity to a user. The UE 110 may communicate with one or more core networks via a radio access network (RAN). The UE 110 may be an Internet of things UE, such as a sensor device, a mobile phone and a computer with an Internet of things UE. For example, the UE 110 may be a fixed, portable, pocket-sized, handheld, built-in computer or vehicle-mounted apparatus, for example, a station (STA), a subscriber unit, a subscriber station, a mobile station, a mobile, a remote station, an access point, a remote terminal, an access terminal, a user terminal, a user agent, a user device, or user equipment (UE). Or, the UE 110 may be a device of an unmanned aerial vehicle. Or, the UE 110 may be a vehicle-mounted device, for example, a driving computer with a wireless communication function, or a wireless communication device externally connected with a driving computer. Or, the UE 110 may be a roadside device, such as a street lamp, a signal lamp or other roadside devices with a wireless communication function.

The base station 120 may be a network side device in the wireless communication system. The wireless communication system may be a 4th generation mobile communication (4G) system, also referred to as a long term evolution (LTE) system. Or, the wireless communication system may be a 5G system, also referred to as a new radio (NR) system or a 5G NR system. Or, the wireless communication system may be a next generation system of the 5G system. The access network in the 5G system may be referred to as a new generation-radio access network (NG-RAN).

The base station 120 may be an evolved base station (eNB) used in the 4G system. Or, the base station 120 may be a centralized distributed architecture base station (gNB) used in the 5G system. When the base station 120 adopts the centralized distributed architecture, it usually includes a central unit (CU) and at least two distributed units (DUs). A protocol stack of a packet data convergence protocol (PDCP) layer, a radio link control (RLC) layer and a media access control (MAC) layer is provided in the central unit. A protocol stack of a physical (PHY) layer is provided in the distributed unit. The specific implementation of the base station 120 is not limited in the embodiments of the present disclosure.

A wireless connection may be established between the base station 120 and the UE 110 through a wireless radio. In different embodiments, the wireless radio is a wireless radio based on the 4th generation mobile communication network technology (4G) standard. Or, the wireless radio is a wireless radio based on the 5th generation mobile communication network technology (5G) standard. For example, the wireless radio is a new radio. Or, the wireless radio may also be a wireless radio based on the next generation mobile communication network technology standard of the 5G.

In some embodiments, an end to end (E2E) connection may also be established between UEs 110, for example, a vehicle to vehicle (V2V) communication, a vehicle to infrastructure (V2I) communication and a vehicle to pedestrian (V2P) communication in a vehicle to everything (V2X) communication.

Here, the above-mentioned UE can be considered as the terminal of the following embodiments.

In some embodiments, the above wireless communication system may further include a network management device 130.

Several base stations 120 are connected to the network management device 130, respectively. The network management device 130 may be a core network device in the wireless communication system. For example, the network management device 130 may be a mobility management entity (MME) in an evolved packet core (EPC). Or, the network management device can also be other core network device, for example, a serving gateway (SGW), a public data network gateway (PGW), a policy and charging rules function (PCRF) or a home subscriber server (HSS), and the like. The implementation form of the network management device 130 is not limited in the embodiments of the present disclosure.

In order to facilitate those skilled in the art to understand, the embodiments of the present disclosure enumerate implementation manners to clearly illustrate the technical solutions of the embodiments of the present disclosure. Of course, those skilled in the art can understand that the embodiments provided in the present disclosure can be executed independently, or can be combined with the methods of other embodiments of the present disclosure to be executed together, or can be executed together with some methods in other related technologies after being executed alone or being combined, which is limited in the embodiments of the present disclosure.

In order to better understand the technical solution described in any embodiment of the present disclosure, firstly, application scenarios in related technologies are described.

In one scenario embodiment, a solution of supporting small data transmission (SDT) in a radio resource control (RRC) inactive state is proposed. That is, a terminal can complete the small data transmission without entering a RRC connected state, thereby reducing the waste of time-frequency resources, shortening the data transmission delay and saving the energy consumption of the terminal.

In one embodiment, the small data transmission supports two manners, namely, a random access procedure based SDT and a configured grant (CG) based SDT. The configured grant based SDT means that when a base station changes from the RRC connected state to the RRC inactive state, semi-static time-frequency domain resource allocation information and timing advance (TA) information required for the SDT are carried in RRC resume or release messages. When the terminal has uplink data to transmit in the RRC inactive state, the terminal first determines a validity of the TA and a size of a data packet. When a threshold is met (for example, refer to a Threshold 3 in FIG. 2), the small data transmission is performed using semi-static resources configured by the base station.

In one embodiment, the random access procedure based SDT is divided into two manners, namely, a 2-step random access based SDT and a 4-step random access based SDT. For the 2-step random access based SDT, a small data packet will be transmitted in a physical uplink share channel (PUSCH) resource of a random access message A (msgA); and for the 4-step random access based SDT, the small data packet will be carried in msg3. For a random access based SDT, it is also necessary to determine the size of the data packet. Only when the size of the data packet is less than a certain threshold value can the small data packet be transmitted in the random access procedure; otherwise, the small data packet needs to be transmitted after entering the connected state through the random access procedure. Besides the limitation of the size of the data packet, the terminal should compare a current synchronization signal reference signal received power (SS-RSRP) with a reference signal received power (RSRP) threshold before transmitting the small data packet. For example, refer to FIG. 2 again, only when the current SS-RSRP is greater than a RSRP threshold (that is, a Threshold 1 in FIG. 2), the transmission of the small data packet is performed. Here, the purpose of comparing the RSRP threshold is to ensure that the SDT transmission can only be carried out under good coverage conditions, so as to avoid wasting uplink transmission resources.

For the random access based SDT, whether to select the 2-step random access based SDT or the 4-step random access based SDT, it is also necessary to determine the RSRP threshold. That is, refer to FIG. 2 again, only when the SS-RSRP is greater than a RSRP threshold (that is, a Threshold 2 in FIG. 2), the terminal can use a 2-step random access manner to perform the SDT; otherwise, a 4-step random access manner is used to perform the SDT. Here, the purpose of determining the RSRP threshold is to determine whether the terminal is located in a center of a cell, only when the terminal is close to the base station and a cyclic prefix (CP) can make up for the size of the TA, the terminal can use the 2-step random access manner to perform the SDT. The Threshold 1 mentioned above here is less than the Threshold 2.

Similar to Internet of things devices in long term evolution (LTE), Internet of things in a 5th generation mobile networks based NR-Lite usually needs to meet the following requirements: low cost and low complexity, a certain degree of coverage enhancement, and power saving. Since a new radio (NR) is designed for high-end terminals of high-speed and low-latency, the current design cannot meet the above requirements of the NR-lite. Therefore, it is necessary to modify a NR system to meet the requirements of the NR-lite. For example, in order to meet the requirements of low cost and low complexity, a bandwidth of the NR-IoT can be limited, for example, to 20MHz; or the size of the buffer of the NR-lite can be limited to further limit each received transmission block. For power saving, the optimization can be made to by simplifying communication processes, reducing the number of times of detecting a downlink control channel by NR-lite users, and the like.

In the related technologies, since the RedCap terminals support 1Rx and 2Rx in frequency range 1 (FR1), and different numbers of antenna elements included in different antenna panels in frequency range 2 (FR2), the measured RSRP values are different although the terminals have the same uplink transmission capability in the same position, and finally, RedCap terminals with IRx terminals or with fewer antenna elements cannot have the same opportunity to use the SDT.

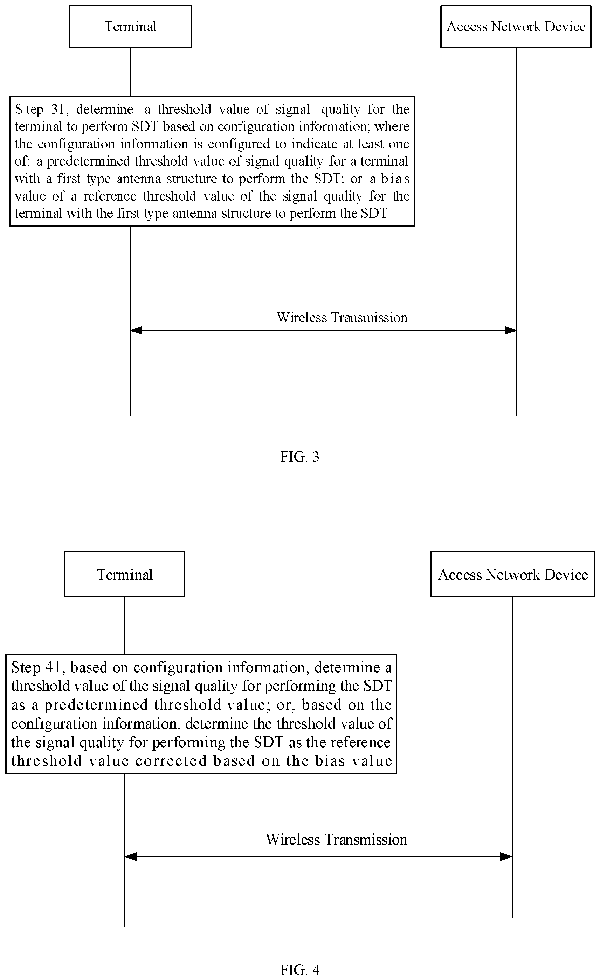

As shown in FIG. 3, an embodiment of the present disclosure provides a wireless transmission method. The method is performed by a terminal and includes:
step 31, a threshold value of signal quality for the terminal to perform small data transmission (SDT) is determined based on configuration information;
where the configuration information is configured to indicate at least one of:
a predetermined threshold value of signal quality for a terminal with a first type antenna structure to perform the SDT; or
a bias value of a reference threshold value of the signal quality for the terminal with the first type antenna structure to perform the SDT.

Here, the terminal involved in the present disclosure can be, but is not limited to, mobile phones, wearable devices, vehicle-mounted terminals, road side units (RSU), smart home terminals, industrial sensing devices and/or medical devices. In some embodiments, the terminal may be a RedCap terminal or a new radio (NR) terminal of a predetermined version (for example, an NR terminal of R17). It should be noted that the RedCap terminal may be an enhanced eRedCap terminal.

An access network device involved in the present disclosure can be various types of base stations, for example, the base stations of the third generation mobile communication (3G) network, the fourth generation mobile communication (4G) network, the fifth generation mobile communication (5G) network or other evolved base stations.

In one scenario embodiment, before determining whether to perform the SDT, the terminal can obtain signal quality of a synchronization signal and compare the signal quality with a threshold value of the signal quality. Only when it is determined that the signal quality is greater than the threshold value, the SDT will be performed; otherwise, the SDT will not be performed, thereby reducing the waste of resources. Here, the signal quality is used to indicate transmission quality of a signal, which can be determined by at least one of the following parameters: reference signal receiving power (RSRP), received signal strength indicator (RSSI), reference signal receiving quality (RSRQ) and signal to interference plus noise ratio (SINR). It should be noted that the determination of the signal quality is not limited to the above parameters.

A small data packet in the present disclosure can be a data packet whose dimension or size is less than a predetermined threshold. The dimension or size of the data packet can be determined according to a number of bits in an information domain occupied by the data packet during transmission. For example, if the number of bits in the information domain occupied by the data packet during transmission is less than a quantity threshold, it is determined that the data packet is a small data packet.

In one embodiment, the SDT is performed in response to the measured signal quality of the synchronization signal being greater than the threshold value of the signal quality for the terminal to perform the SDT and the size of the data packet to be transmitted being less than the predetermined threshold. It should be noted that the term "less than" in the present disclosure means "less than or equal to" in some scenarios, and the term "greater than" in the present disclosure means "greater than or equal to" in some scenarios.

It should be noted that the threshold value of signal quality for the terminal to perform the SDT may be a plurality of threshold values. The plurality of threshold values can be used to determine to perform the SDT using a corresponding transmission manner. For example, the threshold value can include a first threshold value, a second threshold value and a third threshold value. The third threshold value is less than the second threshold value, and the second threshold value is less than the first threshold value. If the measured signal quality of the synchronization signal is greater than the third threshold value and less than the second threshold value, the SDT is performed using a first transmission manner. Alternatively, if the measured signal quality of the synchronization signal is greater than the second threshold value and less than the first threshold value, the SDT is performed using a second transmission manner. Alternatively, if the measured signal quality of the synchronization signal is greater than the first threshold value, the SDT is performed using a third transmission manner. The first transmission manner can be a 4-step random access based SDT manner, the second transmission manner can be a 2-step random access based SDT manner, and the third transmission manner can be a configured grant based SDT manner.

It should be noted that for terminals with different antenna structures, the configured threshold values of signal quality for performing the SDT can be different. Here, the terminal can include a terminal with a first type antenna structure, and the like. For example, predetermined threshold values of signal quality configured for the terminals with different antenna structures to perform the SDT are different, or bias values of reference threshold value of the signal quality configured for the terminals with different antenna structures are different.

In one embodiment, the terminal can include a terminal with a first type antenna structure. The first type antenna structure includes one of the following: in response to the terminal operating in a frequency range 1 (FR1), a number of receiving antennas being a predetermined number; or in response to the terminal operating in a frequency range 2 (FR2), a number of antenna elements included in a single antenna panel being less than a quantity threshold. For example, the predetermined number can be 1. The quantity threshold can be determined according to the antenna elements contained in one antenna panel in the NR terminal. For example, the quantity threshold is the number of antenna elements contained in one antenna panel in the NR terminal (non-RedCap UE, which can also be referred to as a non-RedCap terminal or an ordinary UE).

In one embodiment, the terminal determines a threshold value of signal quality for the terminal to perform small data transmission (SDT) based on configuration information. The configuration information is configured to indicate a predetermined threshold value of signal quality for a terminal with a first type antenna structure to perform the SDT. If the terminal determines that the terminal is the terminal with the first type antenna structure and the measured signal quality of the synchronization signal is greater than the predetermined threshold value, the SDT is performed.

In one embodiment, the configuration information is determined based on a communication protocol. The threshold value of signal quality for the terminal to perform small data transmission (SDT) is determined based on configuration information. The configuration information is configured to indicate the predetermined threshold value of signal quality for the terminal with the first type antenna structure to perform the SDT. If the terminal determines that the terminal is the terminal with the first type antenna structure and the measured signal quality of the synchronization signal is greater than the predetermined threshold value, the SDT is performed. Of course, the configuration information can also be preset in the terminal, and the specific solution will not be repeated here.

In one embodiment, the configuration information sent by an access network device is received. The threshold value of signal quality for the terminal to perform small data transmission (SDT) is determined based on configuration information. The configuration information is configured to indicate the predetermined threshold value of signal quality for the terminal with the first type antenna structure to perform the SDT. If the terminal determines that the terminal is the terminal with the first type antenna structure and the measured signal quality of the synchronization signal is greater than the predetermined threshold value, the SDT is performed.

In one embodiment, the terminal determines a threshold value of signal quality for the terminal to perform small data transmission (SDT) based on configuration information. The configuration information is configured to indicate a bias value of a reference threshold value of the signal quality for the terminal with the first type antenna structure to perform the SDT. If the terminal determines that the terminal is the terminal with the first type antenna structure and the measured signal quality of the synchronization signal is greater than the reference threshold value corrected based on the bias value, the SDT is performed. It should be noted that the reference threshold value can be a threshold value used by a non-RedCap terminal when performing the SDT. The non-RedCap terminal can be understood as a terminal whose capability has not been reduced, for example, an LTE terminal. The bias value can be an offset. The bias value can be used to correct the reference threshold value by subtracting the bias value from the reference threshold value. Here, all terminals (including RedCap terminals and non-RedCap terminals) can receive the reference threshold value in advance. The reference threshold value is a threshold value shared by all terminals.

It should be noted that in one embodiment, after receiving the bias value, the terminal can also use the bias value to correct the measured signal quality of the synchronization signal, and if the terminal determines that the terminal is a terminal with the first type antenna structure and the corrected signal quality of the synchronization signal is greater than the reference threshold value, the SDT is performed. Here, the bias value can be used to correct the measured signal quality of the synchronization signal by adding the bias value to the measured signal quality of the synchronization signal. It can be understood that in the present embodiment, the reference threshold value is actually corrected, and compared with the direct correction of the reference threshold value, it is only a conversion in calculation form.

In one embodiment, the configuration information is determined based on a communication protocol. A threshold value of signal quality for the terminal to perform small data transmission (SDT) is determined based on configuration information. The configuration information is configured to indicate a bias value of a reference threshold value of the signal quality for the terminal with the first type antenna structure to perform the SDT. If the terminal determines that the terminal is the terminal with the first type antenna structure and the measured signal quality of the synchronization signal is greater than the reference threshold value corrected based on the bias value, the SDT is performed.

In one embodiment, the configuration information sent by an access network device is received. A threshold value of signal quality for the terminal to perform small data transmission (SDT) is determined based on configuration information. The configuration information is configured to indicate a bias value of a reference threshold value of the signal quality for the terminal with the first type antenna structure to perform the SDT. If the terminal determines that the terminal is the terminal with the first type antenna structure and the measured signal quality of the synchronization signal is greater than the reference threshold value corrected based on the bias value, the SDT is performed.

In the embodiments of the present disclosure, determining a threshold value of signal quality for the terminal to perform small data transmission (SDT) based on configuration information, where the configuration information is configured to indicate at least one of a predetermined threshold value of signal quality for a terminal with a first type antenna structure to perform the SDT; or a bias value of a reference threshold value of the signal quality for the terminal with the first type antenna structure to perform the SDT. Here, since the configuration information indicates the predetermined threshold value of signal quality for the terminal with the first type antenna structure to perform the SDT and/or the bias value of the reference threshold value of the signal quality for the terminal with the first type antenna structure to perform the SDT, the terminal can determine a threshold value of the signal quality for the terminal to perform the SDT based on its own first type antenna structure and the corresponding predetermined threshold value, and perform the SDT based on the threshold value; alternatively, the terminal can determine a threshold value of the signal quality for the terminal to perform the SDT based on its own first type antenna structure and the corresponding reference threshold value and bias value, and perform the SDT based on the threshold value. Since the predetermined threshold value and/or the bias value are configured for the first type antenna structure, the predetermined threshold value and the bias value can be adapted to the first type antenna structure. Compared with a method of using a fixed threshold value for the SDT or a threshold value for a non-first type antenna structure to perform the SDT, the terminal with the first type antenna structure can more easily meet conditions for performing the SDT, thereby increasing opportunities for the terminal with the first type antenna structure to perform the SDT.

It should be noted that those skilled in the art can understand that the method provided in the embodiment of the present disclosure can be performed separately or together with some methods in the embodiments of the present disclosure or some methods in related technologies.

As shown in FIG. 4, an embodiment of the present disclosure provides a wireless transmission method. The method is performed by a terminal, which is a terminal with a first type antenna structure. The method includes:
step 41, based on configuration information, a threshold value of the signal quality for performing the SDT is determined as a predetermined threshold value; or, based on the configuration information, the threshold value of the signal quality for performing the SDT is determined as the reference threshold value corrected based on the bias value.

The configuration information is configured to indicate at least one of: a predetermined threshold value of signal quality for a terminal with a first type antenna structure to perform the SDT; or a bias value of a reference threshold value of the signal quality for the terminal with the first type antenna structure to perform the SDT.

In one embodiment, the threshold value of the signal quality for performing the SDT is determined as the predetermined threshold value based on configuration information. The configuration information is used to indicate the predetermined threshold value of signal quality for the terminal with the first type antenna structure to perform the SDT. If the terminal determines that the terminal is the terminal with the first type antenna structure and the measured signal quality of the synchronization signal is greater than the predetermined threshold value, the SDT is performed.

In one embodiment, based on the configuration information, a threshold value of the signal quality for performing the SDT is determined as the reference threshold value corrected based on the bias value. The configuration information is used to indicate the bias value of the reference threshold value of the signal quality for the terminal with the first type antenna structure to perform the SDT. If the terminal determines that the terminal is the terminal with the first type antenna structure and the measured signal quality of the synchronization signal is greater than the reference threshold value corrected based on the bias value, the SDT is performed. It should be noted that in the present embodiment, the measured signal quality of the synchronization signal can be directly corrected based on the bias value, and then the corrected signal quality is compared with the reference threshold value; if the terminal determines that the terminal is the terminal with the first type antenna structure and the corrected signal quality is greater than the reference threshold value, the SDT is performed. It can be understood that in the present embodiment, the reference threshold value is actually corrected, and compared with the direct correction of the reference threshold value, it is only a conversion in calculation form.

It should be noted that those skilled in the art can understand that the method provided in the embodiment of the present disclosure can be performed separately or together with some methods in the embodiments of the present disclosure or some methods in related technologies.

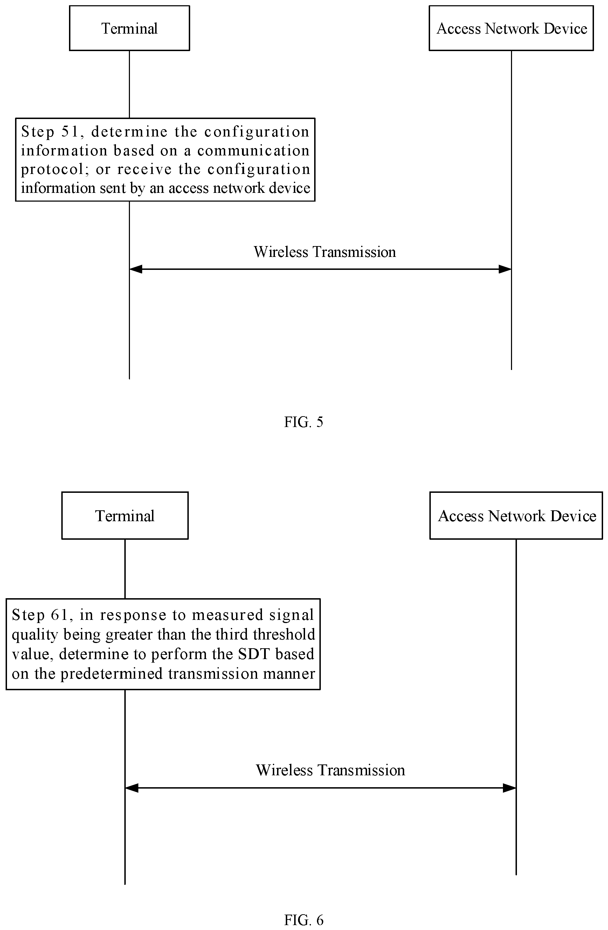

As shown in FIG. 5, an embodiment of the present disclosure provides a wireless transmission method. The method is performed by a terminal, which is a terminal with a first type antenna structure. The method includes:
step 51, the configuration information is determined based on a communication protocol; or the configuration information sent by an access network device is received.

The configuration information is configured to indicate at least one of: a predetermined threshold value of signal quality for a terminal with a first type antenna structure to perform the SDT; or a bias value of a reference threshold value of the signal quality for the terminal with the first type antenna structure to perform the SDT.

In one embodiment, the configuration information is determined based on the communication protocol. A threshold value of the signal quality for performing the SDT is determined as the predetermined threshold value based on the configuration information. The configuration information is configured to indicate the predetermined threshold value of signal quality for a terminal with a first type antenna structure to perform the SDT. If the terminal determines that the terminal is the terminal with the first type antenna structure and the measured signal quality of the synchronization signal is greater than the predetermined threshold value, the SDT is performed.

In one embodiment, the configuration information sent by an access network device is received. Based on the configuration information, a threshold value of the signal quality for performing the SDT is determined as the reference threshold value corrected based on the bias value. The configuration information is used to indicate the bias value of the reference threshold value of the signal quality for the terminal with the first type antenna structure to perform the SDT. If the terminal determines that the terminal is the terminal with the first type antenna structure and the measured signal quality of the synchronization signal is greater than the reference threshold value corrected based on the bias value, the SDT is performed. Here, the configuration information sent by the access network device can be received through higher layer signaling. The higher layer signaling can be public downlink control information or terminal specific downlink control information, for example, RRC messages, and the like.

It should be noted that those skilled in the art can understand that the method provided in the embodiment of the present disclosure can be performed separately or together with some methods in the embodiments of the present disclosure or some methods in related technologies.

As shown in FIG. 6, an embodiment of the present disclosure provides a wireless transmission method. The method is performed by a terminal, which is a terminal with a first type antenna structure. The method includes:
step 61, in response to measured signal quality being greater than the third threshold value, it is determined to perform the SDT based on the predetermined transmission manner.

In one embodiment, the threshold value of the signal quality includes a threshold value of signal quality for the terminal to perform the SDT based on a predetermined transmission manner, and the predetermined transmission manner includes at least one of:
a first manner, which is a configured grant based SDT manner;
a second manner, which is a 2-step random access based SDT manner; or
a third manner, which is a 4-step random access based SDT manner,
where a threshold value of the first manner is a first threshold value, a threshold value of the second manner is a second threshold value, a threshold value of the third manner is a third threshold value, the first threshold value is greater than the second threshold value, and the second threshold value is greater than the third threshold value.

In one embodiment, the threshold value of signal quality for the terminal to perform small data transmission (SDT) is determined based on configuration information. The configuration information is configured to indicate at least one of: a predetermined threshold value of signal quality for a terminal with a first type antenna structure to perform the SDT; or a bias value of a reference threshold value of the signal quality for the terminal with the first type antenna structure to perform the SDT. The measured signal quality is determined, and it is determined to perform the SDT based on the predetermined transmission manner in response to measured signal quality being greater than the third threshold value.

In one embodiment, the threshold value of signal quality for the terminal to perform small data transmission (SDT) is determined based on configuration information. The configuration information is configured to indicate at least one of: a predetermined threshold value of signal quality for a terminal with a first type antenna structure to perform the SDT; or a bias value of a reference threshold value of the signal quality for the terminal with the first type antenna structure to perform the SDT. The measured signal quality is determined, and it is determined to perform the SDT based on the first manner in response to measured signal quality being greater than the third threshold value and greater than the first threshold value.

In one embodiment, the threshold value of signal quality for the terminal to perform small data transmission (SDT) is determined based on configuration information. The configuration information is configured to indicate at least one of: a predetermined threshold value of signal quality for a terminal with a first type antenna structure to perform the SDT; or a bias value of a reference threshold value of the signal quality for the terminal with the first type antenna structure to perform the SDT. The measured signal quality is determined, and it is determined to perform the SDT based on the second manner in response to measured signal quality being greater than the third threshold value, greater than the second threshold value and less than the first threshold value.

In one embodiment, the threshold value of signal quality for the terminal to perform small data transmission (SDT) is determined based on configuration information. The configuration information is configured to indicate at least one of: a predetermined threshold value of signal quality for a terminal with a first type antenna structure to perform the SDT; or a bias value of a reference threshold value of the signal quality for the terminal with the first type antenna structure to perform the SDT. The measured signal quality is determined, and it is determined to perform the SDT based on the third manner in response to measured signal quality being greater than the third threshold value, less than the first threshold value and less than the second threshold value.

It should be noted that those skilled in the art can understand that the method provided in the embodiment of the present disclosure can be performed separately or together with some methods in the embodiments of the present disclosure or some methods in related technologies.

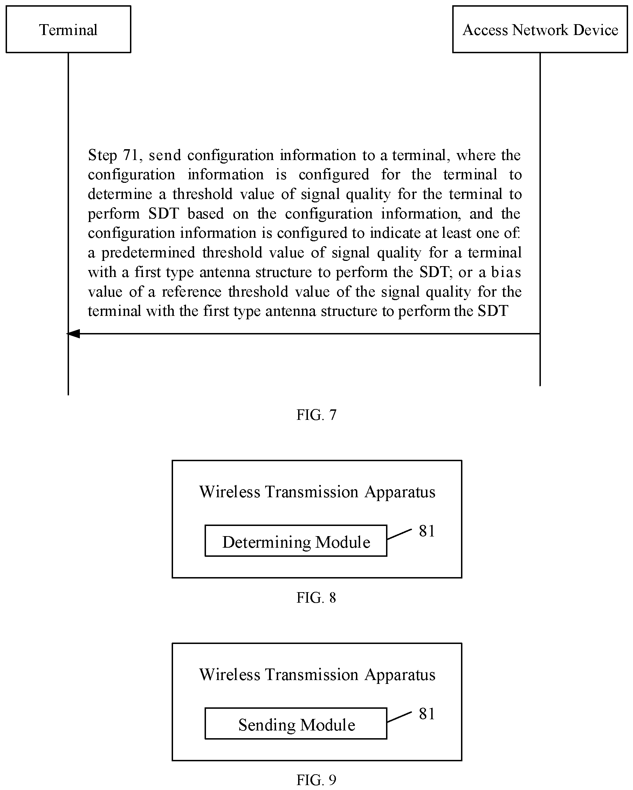

As shown in FIG. 7, an embodiment of the present disclosure provides a wireless transmission method. The method is performed by an access network device. The method includes:
step 71, configuration information is sent to a terminal,
where the configuration information is configured for the terminal to determine a threshold value of signal quality for the terminal to perform small data transmission (SDT) based on the configuration information,
the configuration information is configured to indicate at least one of:
a predetermined threshold value of signal quality for a terminal with a first type antenna structure to perform the SDT; or
a bias value of a reference threshold value of the signal quality for the terminal with the first type antenna structure to perform the SDT.

Here, the terminal involved in the present disclosure can be, but is not limited to, mobile phones, wearable devices, vehicle-mounted terminals, road side units (RSU), smart home terminals, industrial sensing devices and/or medical devices. In some embodiments, the terminal may be a RedCap terminal or a new radio (NR) terminal of a predetermined version (for example, an NR terminal of R17). It should be noted that the RedCap terminal may be an enhanced eRedCap terminal.

The access network device involved in the present disclosure can be various types of base stations, for example, the base stations of the third generation mobile communication (3G) network, the fourth generation mobile communication (4G) network, the fifth generation mobile communication (5G) network or other evolved base stations.

In one embodiment, the access network device sends the configuration information to the terminal. The configuration information is configured for the terminal to determine a threshold value of signal quality for the terminal to perform small data transmission (SDT) based on the configuration information, and the configuration information is configured to indicate at least one of: a predetermined threshold value of signal quality for a terminal with a first type antenna structure to perform the SDT; or a bias value of a reference threshold value of the signal quality for the terminal with the first type antenna structure to perform the SDT. Before determining whether to perform the SDT, the terminal can obtain signal quality (for example, RSRP) of a synchronization signal and compare the signal quality with a threshold value of the signal quality. Only when it is determined that the signal quality is greater than the threshold value, the terminal will perform the SDT; otherwise, the terminal will not perform the SDT, thereby reducing the waste of resources. Here, the signal quality is used to indicate transmission quality of a signal, which can be determined by at least one of the following parameters: reference signal receiving power (RSRP), received signal strength indicator (RSSI), reference signal receiving quality (RSRQ) and signal to interference plus noise ratio (SINR). It should be noted that the determination of the signal quality is not limited to the above parameters.

A small data packet in the present disclosure can be a data packet whose dimension or size is less than a predetermined threshold. The dimension or size of the data packet can be determined according to a number of bits in an information domain occupied by the data packet during transmission. For example, if the number of bits in the information domain occupied by the data packet during transmission is less than a quantity threshold, it is determined that the data packet is a small data packet.

In one embodiment, the access network device sends the configuration information to the terminal. The configuration information is configured for the terminal to determine a threshold value of signal quality for the terminal to perform small data transmission (SDT) based on the configuration information, and the configuration information is configured to indicate at least one of: a predetermined threshold value of signal quality for a terminal with a first type antenna structure to perform the SDT; or a bias value of a reference threshold value of the signal quality for the terminal with the first type antenna structure to perform the SDT. In response to the measured signal quality of the synchronization signal being greater than the threshold value of the signal quality for the terminal to perform the SDT and the size of the data packet to be transmitted being less than the predetermined threshold, the SDT is performed.

It should be noted that the threshold value of signal quality for the terminal to perform the SDT may be a plurality of threshold values. The plurality of threshold values can be used for the terminal to determine to perform the SDT using a corresponding transmission manner. For example, the threshold value can include a first threshold value, a second threshold value and a third threshold value. The third threshold value is less than the second threshold value, and the second threshold value is less than the first threshold value. If the measured signal quality of the synchronization signal is greater than the third threshold value and less than the second threshold value, the terminal performs the SDT using a first transmission manner. Alternatively, if the measured signal quality of the synchronization signal is greater than the second threshold value and less than the first threshold value, the terminal performs the SDT using a second transmission manner. Alternatively, if the measured signal quality of the synchronization signal is greater than the first threshold value, the terminal performs the SDT using a third transmission manner. The first transmission manner can be a 4-step random access based SDT manner, the second transmission manner can be a 2-step random access based SDT manner, and the third transmission manner can be a configured grant based SDT manner.

It should be noted that for terminals with different antenna structures, the configured threshold values of signal quality for performing the SDT can be different. Here, the terminal can include a terminal with a first type antenna structure, and the like. For example, predetermined threshold values of signal quality configured for the terminals with different antenna structures to perform the SDT are different, or bias values of reference threshold value of the signal quality configured for the terminals with different antenna structures are different.

In one embodiment, the terminal can include a terminal having a first type antenna structure. The first type antenna structure includes one of the following: in response to the terminal operating in a frequency range 1 (FR1), a number of receiving antennas being a predetermined number; or in response to the terminal operating in a frequency range 2 (FR2), a number of antenna elements included in a single antenna panel being less than a quantity threshold. For example, the predetermined number can be 1. The quantity threshold can be determined according to the antenna elements contained in one antenna panel in the NR terminal. For example, the quantity threshold is the number of antenna elements contained in one antenna panel in the NR terminal (non-RedCap UE).

In one embodiment, the access network device sends the configuration information to the terminal. The configuration information is configured to indicate a predetermined threshold value of signal quality for a terminal with a first type antenna structure to perform the SDT. The terminal determines a threshold value of signal quality for the terminal to perform small data transmission (SDT) based on configuration information, and if the terminal determines that the terminal is the terminal with the first type antenna structure and the measured signal quality of the synchronization signal is greater than the predetermined threshold value, the terminal performs the SDT.

In one embodiment, the access network device sends the configuration information to the terminal. The configuration information is configured to indicate a bias value of a reference threshold value of the signal quality for the terminal with the first type antenna structure to perform the SDT. The terminal determines a threshold value of signal quality for the terminal to perform small data transmission (SDT) based on configuration information, and if the terminal determines that the terminal is the terminal with the first type antenna structure and the measured signal quality of the synchronization signal is greater than the reference threshold value corrected based on the bias value, the terminal performs the SDT. It should be noted that the reference threshold value can be a threshold value used by a non-RedCap terminal when performing the SDT. The non-RedCap terminal can be understood as a terminal whose capability has not been reduced, for example, an LTE terminal. The bias value can be an offset. The bias value can be used to correct the reference threshold value by subtracting the bias value from the reference threshold value. Here, the access network device can send the reference threshold value to the terminal (including the RedCap terminal and the non-RedCap terminal) in advance. The reference threshold value is a threshold value shared by all terminals.

It should be noted that in one embodiment, after receiving the bias value, the terminal can also use the bias value to correct the measured signal quality of the synchronization signal, and if the terminal determines that the terminal is a terminal with the first type antenna structure and the corrected signal quality of the synchronization signal is greater than the reference threshold value, the SDT is performed. Here, the bias value can be used to correct the measured signal quality of the synchronization signal by adding the bias value to the measured signal quality of the synchronization signal. It can be understood that in the present embodiment, the reference threshold value is actually corrected, and compared with the direct correction of the reference threshold value, it is only a conversion in calculation form.

It should be noted that those skilled in the art can understand that the method provided in the embodiment of the present disclosure can be performed separately or together with some methods in the embodiments of the present disclosure or some methods in related technologies.

In one embodiment, the threshold value of the signal quality includes a threshold value of signal quality for the terminal to perform the SDT based on a predetermined transmission manner. The predetermined transmission manner includes at least one of:
a first manner, which is a configured grant based SDT manner;
a second manner, which is a 2-step random access based SDT manner; or
a third manner, which is a 4-step random access based SDT manner,
where a threshold value of the first manner is a first threshold value, a threshold value of the second manner is a second threshold value, a threshold value of the third manner is a third threshold value, the first threshold value is greater than the second threshold value, and the second threshold value is greater than the third threshold value.

It should be noted that for terminals with different antenna structures, the configured threshold values of signal quality for performing the SDT can be different. Here, the terminal can include a terminal with a first type antenna structure, and the like. For example, predetermined threshold values of signal quality configured for the terminals with different antenna structures to perform the SDT are different, or bias values of reference threshold value of the signal quality configured for the terminals with different antenna structures are different.

In one embodiment, the terminal can include terminals with different types of antenna structures. The first type antenna structure includes one of the following: in response to the terminal operating in a frequency range 1 (FR1), a number of receiving antennas being a predetermined number; or in response to the terminal operating in a frequency range 2 (FR2), a number of antenna elements included in a single antenna panel being less than a quantity threshold. For example, the predetermined number can be 1. The quantity threshold can be determined according to the antenna elements contained in one antenna panel in the NR terminal. For example, the quantity threshold is the number of antenna elements contained in one antenna panel in the NR terminal (non-RedCap terminal).

In order to better understand the embodiments of the present disclosure, the technical solutions of the present disclosure will be further explained by two exemplary embodiments.

### Example 1

There is provided a wireless transmission method. The method includes the following steps.

Step 81, a terminal obtains a RSRP Threshold 1 to determine whether to perform SDT, and determines whether to perform the SDT based on a RSRP Threshold 1 corrected by a bias value. If the measured RSRP exceeds the corrected RSRP Threshold 1, the SDT is performed. It should be noted that the measured RSRP can be directly corrected based on the bias value, and then the corrected RSRP is directly compared with the RSRP Threshold 1; if the corrected RSRP is greater than the RSRP Threshold 1, the SDT can be performed. Here, the RSRP threshold or the measured RSRP can be corrected based on the bias value indicated by the configuration information.

Step 82, if the terminal is configured with corresponding CG-SDT resources, the terminal obtains a RSRP Threshold 2 of CG-SDT; if a timing advance condition of CG-SDT is met, and the terminal compares the corrected RSRP Threshold 2 with the measured current RSRP to determine whether the terminal can use the CG-SDT; if the CG-SDT can be used (that is, the measured current RSRP is greater than the corrected RSRP Threshold 2), CG-SDT is used for the SDT. Here, the RSRP Threshold 2 can be corrected based on the bias value indicated by the configuration information.

Step 83, if the condition of performing the CG-SDT is not met, and if the 2-step RACH SDT is configured, the terminal obtains a RSRP Threshold 3 of the 2-step RACH SDT, compares the corrected RSRP Threshold 3 with the measured current RSRP; if the condition of performing the CG-SDT is met (that is, the measured current RSRP is greater than the corrected RSRP Threshold 3), the 2-step RACH SDT is used for the SDT; otherwise, 4-step RACH SDT is used. Here, the RSRP Threshold 3 can be corrected based on the bias value indicated by the configuration information.

It should be noted that those skilled in the art can understand that the method provided in the embodiment of the present disclosure can be performed separately or together with some methods in the embodiments of the present disclosure or some methods in related technologies.

### Example 2

There is provided a wireless transmission method. The method includes the following steps.

Step 91, a terminal determines a corresponding RSRP threshold according to an antenna structure of the terminal, for example, reading a threshold value indicated in configuration information or subtracting a corresponding correction factor (corresponding a bias value) based on the threshold value in the read configuration information to finally determine a threshold value of signal quality for the terminal to perform a small data transmission (SDT).

Step 92, the threshold value finally determined is used to determine whether to perform the SDT, and it is determined whether to use CG-SDT or 2-step random access or 4-step random access to perform the SDT.

It should be noted that those skilled in the art can understand that the method provided in the embodiment of the present disclosure can be performed separately or together with some methods in the embodiments of the present disclosure or some methods in related technologies.

As shown in FIG. 8, an embodiment of the present disclosure provides a wireless transmission apparatus. The apparatus includes:
a determining module 81 configured to determine a threshold value of signal quality for the terminal to perform small data transmission (SDT) based on configuration information,
where the configuration information is configured to indicate at least one of:
a predetermined threshold value of signal quality for a terminal with a first type antenna structure to perform the SDT; or
a bias value of a reference threshold value of the signal quality for the terminal with the first type antenna structure to perform the SDT.

It should be noted that those skilled in the art can understand that the method provided in the embodiment of the present disclosure can be performed separately or together with some methods in the embodiments of the present disclosure or some methods in related technologies.

As shown in FIG. 9, an embodiment of the present disclosure provides a wireless transmission apparatus. The apparatus includes:
a sending module 91 configured to send configuration information to a terminal,
where the configuration information is configured for the terminal to determine a threshold value of signal quality for the terminal to perform small data transmission (SDT) based on the configuration information,
the configuration information is configured to indicate at least one of:
a predetermined threshold value of signal quality for a terminal with a first type antenna structure to perform the SDT; or
a bias value of a reference threshold value of the signal quality for the terminal with the first type antenna structure to perform the SDT.

It should be noted that those skilled in the art can understand that the method provided in the embodiment of the present disclosure can be performed separately or together with some methods in the embodiments of the present disclosure or some methods in related technologies.

An embodiment of the present disclosure provides a communication device, including:
one or more processors; and
a memory for storing executable instructions of the processor,
where the processors are configured to, when executing the executable instructions, implement the method described in any embodiment of the present disclosure.

The processors may include various types of storage media, which are non- temporary computer storage media that can continue to remember information stored on the user equipment after power failure.

The processors can be connected to the memory through a bus or other means for reading executable programs stored on the memory.

An embodiment of the present disclosure also provides a computer storage medium storing computer executable programs that, when executed by a processor, implement the method described in any embodiment of the present disclosure.

Regarding the apparatuses in the above embodiments, the specific ways in which each module performs operations have been described in detail in the relevant embodiments of the method, and will not be elaborated here.

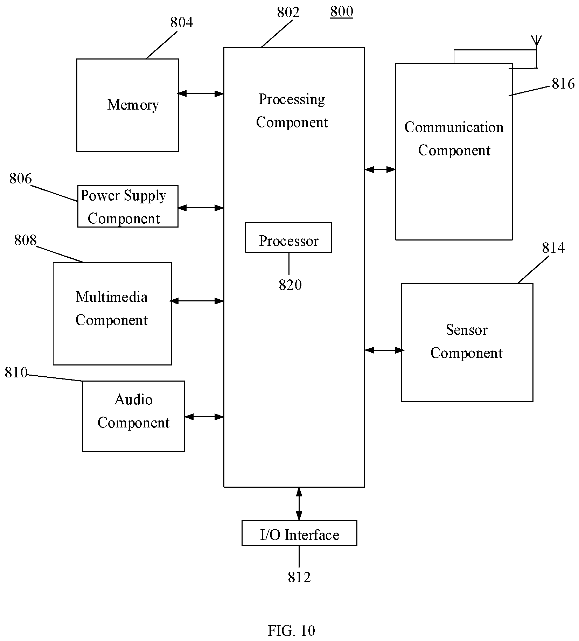

As shown in FIG. 10, an embodiment of the present disclosure provides a structure of a terminal.

Referring to FIG. 10, the present embodiment provides a terminal 800. The terminal can specifically be a mobile phone, a computer, a digital broadcasting terminal, a messaging device, a game console, a tablet device, a medical device, a fitness device, a personal digital assistant, and the like.

Referring to FIG. 10, the terminal 800 can include one or more of the following components: a processing component 802, a memory 804, a power supply component 806, a multimedia component 808, an audio component 810, an input/output (I/O) interface 812, a sensor component 814 and a communication component 816.

The processing component 802 generally controls overall operations of the terminal 800, such as operations associated with display, phone calls, data communication, camera operations, and recording operations. The processing component 802 can include one or more processors 820 to execute instructions to complete all or part of the steps of the above methods. In addition, the processing component 802 can include one or more modules which facilitate the interaction between the processing component 802 and other components. For example, the processing component 802 can include a multimedia module to facilitate the interaction between the multimedia component 808 and the processing component 802.

The memory 804 is configured to store various types of data to support the operation of the terminal 800. Examples of such data include instructions for any application or method operated on the terminal 800, contact data, phonebook data, messages, pictures, videos, and so on. The memory 804 can be implemented by any type of volatile or non-volatile storage devices or a combination thereof, such as a Static Random Access Memory (SRAM), an Electrically Erasable Programmable Read Only Memory (EEPROM), an Erasable Programmable Read Only Memory (EPROM), a Programmable Read Only memory (PROM), a Read Only Memory (ROM), a magnetic memory, a flash memory, a magnetic or an optical disk.

The power supply component 806 provides power to various components of the terminal 800. The power supply component 806 can include a power management system, one or more power supplies, and other components associated with generating, managing, and distributing power for the terminal 800.

The multimedia component 808 includes a screen providing an output interface between the terminal 800 and a user. In some examples, the screen may include a liquid crystal display (LCD) and a touch panel (TP). If the screen includes the TP, the screen can be implemented as a touch screen to receive input signals from the user. The TP includes one or more touch sensors to sense touches, swipes, and gestures on the TP. The touch sensor can not only sense a boundary of a touch or swipe, but also sense a lasting time and a pressure associated with the touch or swipe. In some embodiments, the multimedia component 808 can include a front camera and/or a rear camera. The front camera and/or rear camera can receive external multimedia data when the terminal 800 is in an operating mode, such as a photographing mode or a video mode. Each of the front camera and the rear camera can be a fixed optical lens system or have focal length and optical zooming capability.

The audio component 810 is configured to output and/or input an audio signal. For example, the audio component 810 includes a microphone (MIC). When the terminal 800 is in an operating mode, such as a call mode, a recording mode, and a voice recognition mode, the MIC is configured to receive an external audio signal. The received audio signal may be further stored in the memory 804 or transmitted via the communication component 816. In some embodiments, the audio component 810 further includes a speaker to output an audio signal.

The I/O interface 812 can provide an interface between the processing component 802 and peripheral interface modules. The above peripheral interface modules can include a keyboard, a click wheel, buttons and so on. These buttons can include, but are not limited to, a home button, a volume button, a starting button and a locking button.

The sensor component 814 includes one or more sensors to provide status assessments of various aspects for the terminal 800. For example, the sensor component 814 can detect the on/off status of the terminal 800, and relative positioning of a component, for example, the component is a display and a keypad of the terminal 800. The sensor component 814 may also detect a change in position of the terminal 800 or a component of the terminal 800, a presence or absence of the contact between a user and the terminal 800, an orientation or an acceleration/deceleration of the terminal 800, and a change in temperature of the terminal 800. The sensor component 814 can include a proximity sensor configured to detect the presence of a nearby object without any physical contact. The sensor component 814 can further include an optical sensor, such as a Complementary Metal Oxide Semiconductor (CMOS) or Charge-coupled Device (CCD) image sensor which is used in imaging applications. In some embodiments, the sensor component 814 can further include an acceleration sensor, a gyroscope sensor, a magnetic sensor, a pressure sensor, or a temperature sensor.

The communication component 816 is configured to facilitate wired or wireless communication between the terminal 800 and other devices. The terminal 800 can access a wireless network that is based on communication standards, such as Wi-Fi, 4G, 5G, or a combination thereof. In an exemplary embodiment, the communication component 816 receives a broadcast signal or broadcast-associated information from an external broadcast management system via a broadcast channel. In an exemplary embodiment, the communication component 816 further includes a Near Field Communication (NFC) module to facilitate short-range paging. For example, the NFC module can be implemented based on a Radio Frequency Identification (RFID) technology, an Infrared Data Association (IrDA) technology, an Ultra-Wide Band (UWB) technology, a Blue Tooth (BT) technology and other technologies.

In an exemplary embodiment, the terminal 800 can be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components for performing the above methods.

In an exemplary embodiment, there is also provided a non-transitory machine readable storage medium including instructions, such as the memory 804 including instructions. The instructions may be executed by the processor 820 of the terminal 800 to perform the above methods. For example, the non-transitory machine readable storage medium can be a ROM, a Random Access Memory (RAM), a CD-ROM, a magnetic tape, a floppy disk, an optical data storage device, and the like.

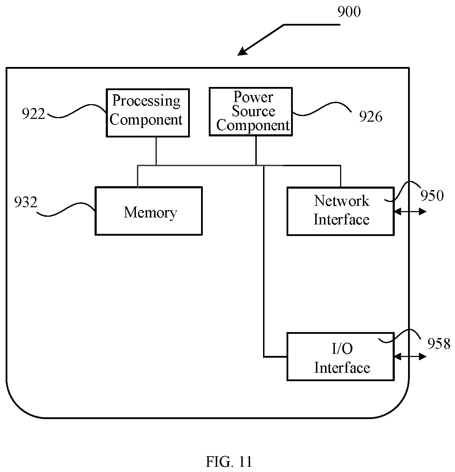

As shown in FIG. 11, an embodiment of the present disclosure illustrates the structure of a base station. For example, the base station 900 can be provided as a network side device. Referring to FIG. 11, the base station 900 includes a processing component 922 which further includes one or more processors, and a memory resource represented by a memory 932, configured to store instructions such as application programs executable by the processing component 922. The application programs stored in the memory 932 can include one or more than one modules, each of which corresponds to a set of instructions. In addition, the processing component 922 is configured to execute the instructions to perform any of the above methods applied to the base station.

The base station 900 can further include a power source component 926 configured to execute power management of the base station 900, a wired or wireless network interface 950 configured to connect the base station 900 to a network, and an I/O interface 958. The base station 900 can be operated on the basis of an operating system stored in the memory 932, such as Windows Server TM, Mac OS XTM, UnixTM, LinuxTM or FreeBSDTM.

Those skilled in the art will readily recognize other embodiments of the present disclosure upon consideration of the specification and practice of the present disclosure disclosed herein. The present disclosure is intended to cover any variations, uses, or adaptations of the present disclosure, which follow general principles of the embodiments of the present disclosure and include common knowledge or customary means in the art that are not disclosed in the present disclosure. The specification and embodiments are exemplary only, with the true scope and spirit of the present disclosure being indicated by the following claims.

It should be understood that the present disclosure is not limited to the precise structure that has been described above and shown in the drawings, and various modifications and changes may be made without departing from the scope thereof. The scope of the present disclosure is limited only by the appended claims.

## Claims

1. A wireless transmission method, performed by a terminal, the method comprising:
determining a threshold value of signal quality for the terminal to perform small data transmission (SDT) based on configuration information,
wherein the configuration information is configured to indicate at least one of:
a predetermined threshold value of signal quality for a terminal with a first type antenna structure to perform the SDT; or
a bias value of a reference threshold value of the signal quality for the terminal with the first type antenna structure to perform the SDT.

2. The method according to claim 1, wherein the terminal is a terminal with the first type antenna structure, and determining the threshold value of the signal quality for the terminal to perform the SDT based on the configuration information comprises:
based on the configuration information, determining the threshold value of the signal quality for performing the SDT as the predetermined threshold value; or
based on the configuration information, determining the threshold value of the signal quality for performing the SDT as the reference threshold value corrected based on the bias value.

3. The method according to claim 1, further comprising:
determining the configuration information based on a communication protocol; or
receiving the configuration information sent by an access network device.

4. The method according to claim 1, wherein the threshold value of the signal quality comprises a threshold value of signal quality for the terminal to perform the SDT based on a predetermined transmission manner, and the predetermined transmission manner comprises at least one of:
a first manner, which is a configured grant based SDT manner;
a second manner, which is a 2-step random access based SDT manner; or
a third manner, which is a 4-step random access based SDT manner,
wherein a threshold value of the first manner is a first threshold value, a threshold value of the second manner is a second threshold value, a threshold value of the third manner is a third threshold value, the first threshold value is greater than the second threshold value, and the second threshold value is greater than the third threshold value.

5. The method according to claim 4, further comprising:
in response to measured signal quality being greater than the third threshold value, determining to perform the SDT based on the predetermined transmission manner.

6. The method according to claim 5, wherein in response to the measured signal quality being greater than the third threshold value, determining to perform the SDT based on the predetermined transmission manner comprises:
in response to the measured signal quality being greater than the third threshold value and greater than the first threshold value, determining to perform the SDT based on the first manner; or
in response to the measured signal quality being greater than the third threshold value, greater than the second threshold value and less than the first threshold value, determining to perform the SDT based on the second manner; or
in response to the measured signal quality being greater than the third threshold value, less than the first threshold value and less than the second threshold value, determining to perform the SDT based on the third manner.

7. The method according to claim 1, wherein predetermined threshold values for terminals with different types of antenna structures to perform the SDT are different; and/or bias values for the terminals with different types of antenna structures to perform the SDT are different.

8. The method according to claim 1, wherein the first type antenna structure comprises one of:
in response to the terminal operating in a frequency range 1 (FR1), a number of receiving antennas being a predetermined number; or
in response to the terminal operating in a frequency range 2 (FR2), a number of antenna elements comprised in a single antenna panel being less than a quantity threshold.

9. A wireless transmission method, performed by an access network device, the method comprising:
sending configuration information to a terminal,
wherein the configuration information is configured for the terminal to determine a threshold value of signal quality for the terminal to perform small data transmission (SDT) based on the configuration information, and the configuration information is configured to indicate at least one of:
a predetermined threshold value of signal quality for a terminal with a first type antenna structure to perform the SDT; or
a bias value of a reference threshold value of the signal quality for the terminal with the first type antenna structure to perform the SDT.

10. The method according to claim 9, wherein the threshold value of the signal quality comprises a threshold value of signal quality for the terminal to perform the SDT based on a predetermined transmission manner, and the predetermined transmission manner comprises at least one of:
a first manner, which is a configured grant based SDT manner;
a second manner, which is a 2-step random access based SDT manner; or
a third manner, which is a 4-step random access based SDT manner,
wherein a threshold value of the first manner is a first threshold value, a threshold value of the second manner is a second threshold value, a threshold value of the third manner is a third threshold value, the first threshold value is greater than the second threshold value, and the second threshold value is greater than the third threshold value.

11. The method according to claim 9, wherein predetermined threshold values for terminals with different types of antenna structures to perform the SDT are different; and/or bias values for the terminals with different types of antenna structures to perform the SDT are different.

12. The method according to claim 9, wherein the first type antenna structure comprises one of:
in response to the terminal operating in a frequency range 1 (FR1), a number of receiving antennas being a predetermined number; or
in response to the terminal operating in a frequency range 2 (FR2), a number of antenna elements comprised in a single antenna panel being less than a quantity threshold.

13. A wireless transmission apparatus, comprising:
a determining module, configured to determine a threshold value of signal quality for the terminal to perform small data transmission (SDT) based on configuration information,
wherein the configuration information is configured to indicate at least one of:
a predetermined threshold value of signal quality for a terminal with a first type antenna structure to perform the SDT; or
a bias value of a reference threshold value of the signal quality for the terminal with the first type antenna structure to perform the SDT.

14. A wireless transmission apparatus, comprising:
a sending module configured to send configuration information to a terminal,
wherein the configuration information is configured for the terminal to determine a threshold value of signal quality for the terminal to perform small data transmission (SDT) based on the configuration information, and the configuration information is configured to indicate at least one of:
a predetermined threshold value of signal quality for a terminal with a first type antenna structure to perform the SDT; or
a bias value of a reference threshold value of the signal quality for the terminal with the first type antenna structure to perform the SDT.

15. A communication device, comprising:
a memory; and
one or more processors connected to the memory and configured to implement the method according to any one of claims 1 to 8 or claims 9 to 12 by executing computer executable instructions stored on the memory.

16. A computer storage medium storing computer executable instructions that, when executed by a processor, implement the method according to any one of claims 1 to 8 or claims 9 to 12.
